# EUROPÄISCHE PATENTANMELDUNG

(11) **EP 4 556 434 A1**
(43) Veröffentlichungstag der Anmeldung: **21.05.2025**
(21) Anmeldenummer: 23020503.1
(22) Anmeldetag: 14.11.2023
(51) Int. Cl.: C01B 3/04, B01J 19/00

(54) **VERFAHREN UND PROZESSANORDNUNG ZUM UMSETZEN VON AMMONIAK**

(71) Anmelder: Linde GmbH, 82049 Pullach (DE)
(72) Erfinder: Volkmar, Lemme, 82049 Pullach (DE)
(74) Vertreter: Fischer, Werner

(57) **Zusammenfassung**

Ein Verfahren zum Umsetzen von Ammoniak unter Verwendung einer Prozessanordnung (100, 200, 300) umfasst, dass zumindest ein Teil einer Ammoniakeinsatzmenge, die der Prozessanordnung (100, 200, 300) zugeführt wird, unter Erhalt eines Stickstoff enthaltenden Gasgemischs umgesetzt wird, wobei das Stickstoff enthaltende Gasgemisch oder ein Teil hiervon durch eine Anzahl von Rohren (410) eines Rohrbündels (400) geführt wird, wobei das Gasgemisch oder dessen durch die Rohre (410) geführter Teil den Rohren (410) an Eintrittsenden (411) zugeführt und an Austrittsenden (412) entnommen wird. Es ist vorgesehen, dass die Rohre (410) oder ein Teil hiervon an ihren Eintrittsenden (411) mit Auskleidehülsen (430) ausgekleidet sind. Eine entsprechende Prozessanordnung (100, 200, 300) wird ebenfalls vorgeschlagen.

## Beschreibung

### Gebiet

Die Erfindung betrifft das Umsetzen von Ammoniak.

### Hintergrund

Ammoniak kann als ein attraktiver Energieträger und eine "Speicherform" für Wasserstoff angesehen werden. Ammoniak ist generell weniger schwierig zu handhaben als komprimiertes oder verflüssigtes Wasserstoffgas.

Ammoniak kann katalytisch zu Stickstoff und Wasserstoff gespalten werden. Alternativ zum Begriff "Spaltung" werden auch Begriffe wie Zerlegung, Cracken und dergleichen verwendet. Die Reaktion ist endotherm und wird im Fall der Katalyse durch niedrigen Druck und hohe Temperatur begünstigt, wobei höhere Drücke verfahrenstechnisch wünschenswert sind, um eine Verdichtung der Verfahrenprodukte mit geringem Aufwand durchführen zu können. Auch eine thermische, nichtkatalytische Ammoniakspaltung ist grundsätzlich möglich.

Ammoniak kann aber auch als zusätzlicher oder ausschließlicher Brennstoff, z.B. in Wärmekraftwerken oder Gasturbinen, verfeuert werden. Neben der Gewinnung thermischer Energie kann hierdurch auch die Bildung von Stickoxiden durch selektive katalytische oder nichtkatalytische Reduktion besser kontrolliert werden. Auch eine Kombination aus Verfeuerung und thermischer Spaltung von Ammoniak ist möglich, wobei die für die Spaltung erforderliche Temperatur durch das Verfeuern von Ammoniak bereitgestellt werden kann.

Bei Ammoniakcrackern, die auf hohen Temperaturen betrieben werden, aber auch in Einrichtungen zum Verfeuern oder Mitverfeuern von Ammoniak, können metallische Teile hohen Stickstoffkonzentrationen bei hohen Metalltemperaturen ausgesetzt sein. Dies kann zu einer Nitridierung (ungenauer auch als Nitrierung bezeichnet) des Metalls und hierdurch zu einer verminderten Duktilität und möglichen Bruchneigung führen.

Es besteht daher der Bedarf nach verbesserten Verfahren und Prozessanordnungen zum Umsetzen von Ammoniak, insbesondere durch Spalten und/oder Verfeuern.

### Übersicht

Vor diesem Hintergrund werden ein Verfahren und eine Prozessanordnung zum Umsetzen von Ammoniak mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zum Umsetzen von Ammoniak unter Verwendung einer Prozessanordnung umfasst, dass mittels der Prozessanordnung zumindest ein Teil einer Ammoniakeinsatzmenge, die der Prozessanordnung zugeführt wird, unter Erhalt eines Stickstoff enthaltenden Gasgemischs umgesetzt wird. Das Stickstoff enthaltende Gasgemisch oder ein Teil hiervon wird durch eine Anzahl von Rohren eines Rohrbündels geführt, wobei das Gasgemisch oder dessen durch die Rohre geführter Teil den Rohren an Eintrittsenden zugeführt und an Austrittsenden entnommen wird. In dem vorgeschlagenen Verfahren ist vorgesehen, dass die Rohre oder ein Teil hiervon an ihren Eintrittsenden mit Auskleidehülsen ausgekleidet sind.

Durch die Verwendung von Auskleidehülsen an den hier vorgeschlagenen Stellen, kann insbesondere sichergestellt werden, dass die thermisch besonders belasteten Eintrittsenden der Rohre des Rohrbündels vor Nitridierung geschützt werden.

In bestimmten Ausgestaltungen können die Auskleidehülsen ein Keramikmaterial aufweisen, wodurch ein besonders guter Schutz erzielt werden kann.

Das Keramikmaterial kann in bestimmten Ausgestaltungen Materialien wie Dialuminiumtrioxid und/oder Zirkondioxid umfassen, die sich in entsprechenden Einsatzgebieten besonders bewährt haben.

In bestimmten Ausgestaltungen können die Auskleidehülsen jedoch auch eine nitridierfeste Legierung aufweisen, beispielsweise eine Nickelbasislegierung. Hierdurch kann eine besonders gute Bearbeitbarkeit erzielt werden.

Es kann in bestimmten Ausgestaltungen aber auch vorgesehen sein, dass die Auskleidehülsen mehrteilig ausgebildet sind, beispielsweise unter Verwendung von Keramiken oder nitridierfesten Legierungen, wodurch die Vorteile entsprechender Materialien kombiniert werden können.

In bestimmten Ausgestaltungen können die Auskleidehülsen Krägen, die an einem Rohrboden, an dem die Rohre mit ihren Eintrittsenden befestigt sind, aufliegen, und sich in die Rohre erstreckende zylindrische Abschnitte aufweisen. Hierdurch können die Übergangsbereiche vom Rohrboden zu den Rohren besonders geschützt werden.

Die Auskleidehülsen können sich in bestimmten Ausgestaltungen insbesondere in einem Anteil von weniger als 10% einer jeweiligen Gesamtlänge der Rohre in diese erstrecken, so dass ein Rest der Rohre ohne Auskleidung verbleibt.

Das erwähnte, Stickstoff enthaltende Gasgemisch oder dessen durch die Rohre geführter Teil kann in bestimmten Ausgestaltungen mit einer Temperatur von 500 bis 900°C den Eintrittsenden der Rohre zugeführt werden.

In hier vorgeschlagenen Ausgestaltungen kann die Prozessanordnung eine Ofeneinheit aufweisen, in der ein erster Teil der Ammoniakeinsatzmenge verbrannt wird, ein zweiter Teil jedoch unverbrannt bleibt. Auf diese Weise kann der erste Teil für eine Wärmegewinnung zum Spalten des zweiten Teils genutzt werden.

Der zweite Teil der Ammoniakeinsatzmenge kann dabei insbesondere thermisch und nichtkatalytisch gespalten werden, wozu durch die Verbrennung des ersten Teils eine ausreichend hohe Temperatur von 650 bis 900°C bereitgestellt wird. Insbesondere bei derartigen Temperaturen erweisen sich die vorgeschlagenen Schutzmaßnahmen gegenüber einer Nitridierung als besonders vorteilhaft.

In anderen Ausgestaltungen kann ein zweiter Teil der Ammoniakeinsatzmenge katalytisch gespalten werden, wozu durch die Verbrennung des ersten Teils geringere Temperaturen von typischerweise 500 bis 750°C bereitgestellt werden.

In nochmals weiteren Ausgestaltungen kann aber auch der zweite Teil der Ammoniakeinsatzmenge in einer weiteren Ofeneinheit verbrannt werden, so dass eine besonders hohe Menge an Wärme bereitgestellt wird.

Die Rohre des Rohrbündels können in unterschiedlichen Ausgestaltungen der Erfindung Wärmeübertragungsrohre und/oder Reaktionsrohre darstellen bzw. als solche betrieben werden. Wärmeübertragungsrohre können insbesondere in einer Wärmerückgewinnungseinheit der Prozessanordnung, die einer Ofeneinheit nachgeschaltet ist, vorgesehen sein, wohingegen Reaktionsrohre mit einem Katalysatorbett zur Umsetzung von unverbranntem Ammoniak ausgeführt sein können.

Die vorgeschlagene Prozessanordung ist dafür eingerichtet, zumindest einen Teil einer Ammoniakeinsatzmenge, die der Prozessanordnung zugeführt wird, unter Erhalt eines Stickstoff enthaltenden Gasgemischs umzusetzen und das Stickstoff enthaltende Gasgemisch oder einen Teil hiervon durch eine Anzahl von Rohren eines Rohrbündels zu führen, wobei das Gasgemisch oder dessen durch die Rohre geführter Teil den Rohren an Eintrittsenden zugeführt und an Austrittsenden entnommen wird. Hierbei ist vorgesehen, dass die Rohre oder ein Teil hiervon an ihren Eintrittsenden mit Auskleidehülsen ausgekleidet sind.

Zu weiteren Merkmalen und Vorteilen einer entsprechenden Prozessanordung und Ausgestaltungen hiervon sei auf die obigen Erläuterungen betreffend das vorgeschlagene Verfahren und seine Ausgestaltungen ausdrücklich verwiesen, da diese hierfür in gleicher Weise gelten.

Entsprechendes gilt auch für eine Prozessanordung, die gemäß einer Ausgestaltung dazu eingerichtet ist, ein Verfahren gemäß einer beliebigen hier vorgeschlagenen Ausgestaltung durchzuführen.

### Kurzbeschreibung der Zeichnung

Ausführungsformen werden nachfolgend rein beispielhaft unter Bezugnahme auf die beigefügte Zeichnung beschrieben, wobei
Figur 1 eine Prozessanordnung gemäß einer Ausgestaltung veranschaulicht,
Figur 2 eine Prozessanordnung gemäß einer Ausgestaltung veranschaulicht,
Figur 3 eine Prozessanordnung gemäß einer Ausgestaltung veranschaulicht,
Figur 4 Teile einer Prozessanordnung gemäß einer Ausgestaltung veranschaulicht,
Figur 5 Teile einer Prozessanordnung gemäß einer Ausgestaltung veranschaulicht.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar, und sollen hinsichtlich der Merkmale der hier vorgeschlagenen Aspekte nicht als abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Merkmale nicht als Beschränkungen in den Ansprüchen definierten Umfangs der Erfindung, oder als Beschränkungen von Äquivalenten hiervon, zu betrachten sind, und dass andere Ausführungsformen verwendet und Änderungen vorgenommen werden können, ohne vom Umfang der beanspruchten Erfindung abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß bestimmten Ausführungsformen beziehen, können auch für Verfahren, Prozesse, Methoden usw. gemäß den Ausführungsformen gelten und umgekehrt.

Gleiche, gleich wirkende, in ihrer Funktion einander entsprechende, baulich identisch oder vergleichbar aufgebaute Elemente, Verfahrensschritte usw. können mit identischen Bezugszeichen angegeben sein und werden lediglich aus Gründen der Übersichtlichkeit nachfolgend nicht wiederholt erläutert.

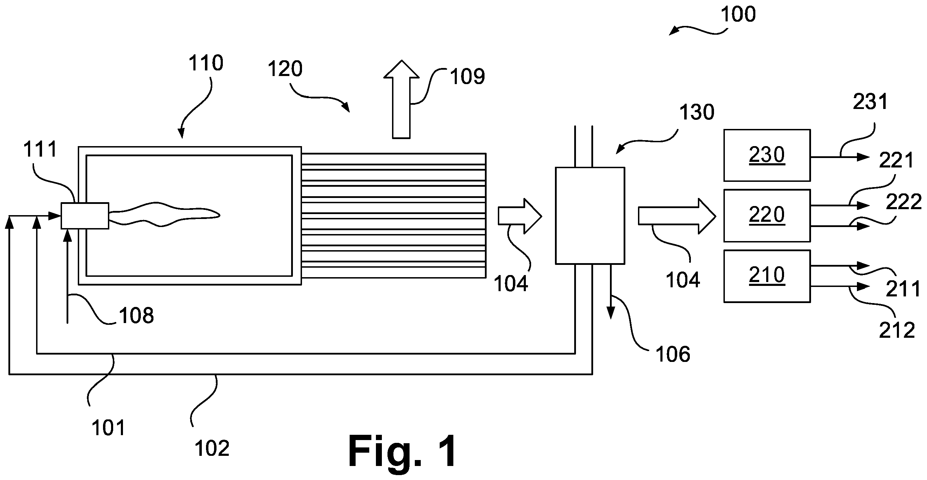

In Figur 1 ist eine Prozessanordnung 100 veranschaulicht, die zur Umsetzung von Ammoniak zur Erzeugung von Wärme und mindestens einem weiteren Produkt, wie beispielsweise Strom und/oder einem im Wesentlichen aus Wasserstoff bestehenden Produkt, verwendet werden kann.

Die Prozessanordnung 100 umfasst eine Ofeneinheit 110, eine stromabwärts der Ofeneinheit 110 angeordnete Wärmeübertragungseinheit 120 und eine stromabwärts der Wärmeübertragungseinheit 120 angeordnete Wärmerückgewinnungseinheit 130.

Die Ofeneinheit 110, die Wärmeübertragungseinheit 120 und die Wärmerückgewinnungseinheit 130 müssen nicht notwendigerweise entlang einer gemeinsamen Achse angeordnet sein, wie dies in Figur 1 dargestellt ist. Eine Voraussetzung für einen Betrieb einer entsprechenden Prozessanordnung 100 ist aber typischerweise, dass die Wärmeübertragungseinheit 120 in Fluidverbindung mit der Ofeneinheit 110 steht und die Wärmerückgewinnungseinheit 130 in Fluidverbindung mit der Wärmeübertragungseinheit 120 steht, wobei mit der Formulierung "in Fluidverbindung" insbesondere ausgedrückt werden soll, dass ein Rauchgas oder ein anderes Gasgemisch von der Ofeneinheit 110 in die Wärmeübertragungseinheit 120 und von der Wärmeübertragungseinheit 120 in die Wärmerückgewinnungseinheit 130 abströmen kann. Die genannten Elemente können horizontal oder vertikal oder in jeder anderen als vorteilhaft erachteten Konfiguration angeordnet sein.

Im dargestellten Beispiel wird ein Brenner 111 verwendet, um einen ersten Teil einer Ammoniakeinsatzmenge, die durch einen dem Brenner 111 zugeführten Ammoniakstrom 101 bereitgestellt wird, in der Ofeneinheit 110 unter Verwendung von Sauerstoff eines dem Brenner 111 zugeführten sauerstoffhaltigen Stroms 102 zu verbrennen und eine Temperatur zu erzeugen, die geeignet ist, Ammoniak thermisch zu Wasserstoff und Stickstoff zu spalten. Die Temperatur liegt insbesondere in dem oben genannten Bereich. Ein zweiter Teil der Ammoniakeinsatzmenge wird nicht verbrennungstechnisch oxidiert, sondern in der Ofeneinheit 110 unter Bildung von Wasserstoff und Stickstoff thermisch gespalten. Erwärmte oder nicht erwärmte Verbrennungsluft ist mit 108 gekennzeichnet.

Die Wärme wird mit Hilfe der Wärmeübertragungseinheit 120 auf ein Wärmeträgermedium 109, wie Wasser oder Dampf, übertragen. Zumindest ein Teil des durch die thermische Spaltung des zweiten Teils der Ammoniakeinsatzmenge gebildeten Wasserstoffs und Stickstoffs wird einem oder mehreren Trennprozessen 210, 220 und/oder einem Gasturbinenprozess 230 zugeführt.

Der eine oder die mehreren Trennprozesse 210, 220 kann oder können mindestens einen Membrantrennschritt und einen adsorptiven Trennschritt, insbesondere einen Druckwechseladsorptionsschritt, umfassen, so dass ein Wasserstoffprodukt 211, 221 und ein Restgas 212, 222, das noch einen Teil des zugeführten Wasserstoffs enthalten kann, erzeugt werden können. In dem Gasturbinenprozess 230 können Elektrizität 231 und ein nicht näher bezeichnetes Rauchgas gebildet werden.

Wie in Figur 1 dargestellt, wird Ammoniak in dem einen oder den mehreren Ammoniakströmen 101 und Sauerstoff in dem einen oder den mehreren sauerstoffhaltigen Strömen 102 sowie in einigen Ausgestaltungen die Verbrennungsluft 108 in der Wärmerückgewinnungseinheit 130 der Prozessanordnung 100 vorgewärmt. Als Wärmeträgermedium 109 kann Wasser oder Dampf verwendet werden. Der Sauerstoff des einen oder der mehreren zweiten sauerstoffhaltigen Ströme 103 und in einigen Ausgestaltungen der Verbrennungsluft 108 kann oder können dem einen oder den mehreren Brennern 111 der Ofeneinheit 110 in einer unterstöchiometrischen Menge zugeführt werden. In der Wärmerückgewinnungseinheit 130 kann sich ein Kondensat bilden, bei dem es sich im Wesentlichen um Wasser handeln kann, und das als Kondensatstrom 106 abgezogen werden kann.

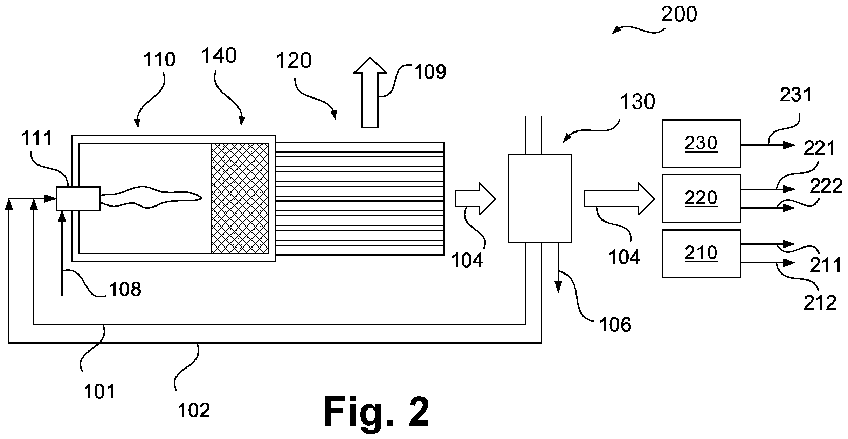

In Figur 2 ist eine Prozessanordnung 200 veranschaulicht, die wie die Prozessanordnung 100 gemäß Figur 1 zur Umsetzung von Ammoniak zur Erzeugung von Wärme und mindestens einem weiteren Produkt, wie beispielsweise Strom und/oder einem im Wesentlichen aus Wasserstoff bestehenden Produkt, verwendet werden kann. Nachfolgend werden lediglich Elemente der Prozessanordnung 200 beschrieben, die noch nicht zu der Prozessanordnung 100 gemäß Figur 1 erörtert wurden. Diese können in der Prozessanordnung 200 in gleicher oder vergleichbarer Weise wie in der Prozessanordnung 100 bereitgestellt sein.

In der Prozessanordnung 200 ist stromabwärts der Ofeneinheit 110 und stromaufwärts der Wärmeübertragungseinheit 120 eine Katalyseeinheit 140 angeordnet. Auch hier gilt bezüglich der Anordnung aller Elemente der Prozessanordnung 200 das zu der Prozessanordnung 100 Gesagte.

Auch in der Prozessanordnung 200 wird der Brenner 111 verwendet, um einen ersten Teil einer Ammoniakeinsatzmenge, die durch einen dem Brenner 111 zugeführten Ammoniakstrom 101 bereitgestellt wird, in der Ofeneinheit 110 unter Verwendung von Sauerstoff des dem Brenner 111 zugeführten sauerstoffhaltigen Stroms 102 zu verbrennen. Hierbei wird allerdings möglicherweise eine abweichende Temperatur als in der Prozessanordnung 100 erzeugt, nämlich eine Temperatur, die geeignet ist, Ammoniak in der Katalyseeinheit 140 katalytisch zu zersetzen, aber nicht, oder nicht notwendigerweise, thermisch zu spalten. Auf die oben genannten Temperaturbereiche wird verwiesen. Ein zweiter Teil der Ammoniakeinsatzmenge wird nicht in der Ofeneinheit 110 verbrannt, sondern erst in der katalytischen Zone 140, und zwar katalytisch, zu Wasserstoff und Stickstoff zersetzt.

Auch in der hier kommt typischerweise eine unterstöchiochiometrische Sauerstoffmenge zum Einsatz, um nur den ersten Teil der Ammoniakeinsatzmenge verbrennungstechnisch zu oxidieren, den zweiten Teil aber katalytisch umzusetzen.

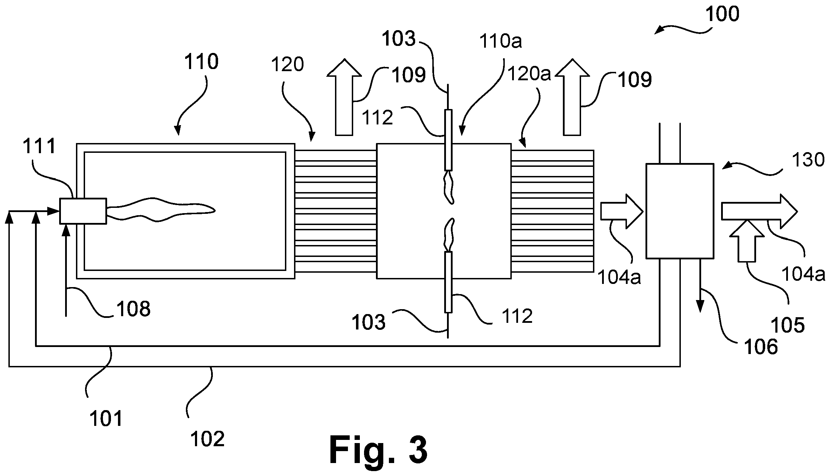

In Figur 3 ist eine Prozessanordnung 300 veranschaulicht, die wie die Prozessanordnungen 100 und 200 gemäß den Figuren 1 und 2 zur Umsetzung von Ammoniak zur Erzeugung von Wärme und mindestens einem weiteren Produkt, wie beispielsweise Strom und/oder einem im Wesentlichen aus Wasserstoff bestehenden Produkt, verwendet werden kann. Nachfolgend werden lediglich Elemente der Prozessanordnung 300 beschrieben, die noch nicht zu den Prozessanordnungen 100 und 200 gemäß den Figuren 1 und 2 erörtert wurden. Diese können in der Prozessanordnung 300 in gleicher oder vergleichbarer Weise wie in den Prozessanordnungen 100 oder 200 bereitgestellt sein.

Die Prozessanordnung 300 umfasst hier eine erste Ofeneinheit und eine zweite Ofeneinheit 110a, eine erste Wärmeübertragungseinheit 120, die stromabwärts der ersten Ofeneinheit 110 angeordnet ist, eine zweite Wärmeübertragungseinheit 120a, die stromabwärts der zweiten Ofeneinheit 110a angeordnet ist, und eine Wärmerückgewinnungseinheit 130, die stromabwärts der zweiten Wärmeübertragungseinheit 120a angeordnet ist.

Auch in der Prozessanordnung 300 wird der Brenner 111 verwendet, um einen ersten Teil einer Ammoniakeinsatzmenge, die durch den dem Brenner 111 zugeführten Ammoniakstrom 101 bereitgestellt wird, in der ersten Ofeneinheit 110 unter Verwendung von Sauerstoff des ersten sauerstoffhaltigen Stroms 102, der dem Brenner 111 zugeführt wird, zu verbrennen und eine Temperatur zu erzeugen, die geeignet ist, Ammoniak thermisch zu spalten. Auch hier wird ein zweiter Teil der Ammoniakeinsatzmenge nicht verbrennungstechnisch oxidiert, sondern in der ersten Ofeneinheit 110 thermisch gespalten, um Wasserstoff und Stickstoff zu bilden. Zwei Einspeiselanzen 112 für Sauerstoff, angereicherte Luft oder atmosphärische Luft 103 dienen im dargestellten Beispiel der Versorgung der zweiten Ofeneinheit 110a mit zusätzlichem Sauerstoff.

Produktdampf 109, bei dem es sich um Sattdampf, überhitzten Dampf, Hochdruckdampf oder Superhochdruckdampf oder eine beliebige Kombination davon handeln kann, wird (beispielsweise aus Kesselspeisewasser) erzeugt oder unter Verwendung der ersten Wärmeübertragungseinheit 120 und/oder der zweiten Wärmeübertragungseinheit 120a erhitzt.

Ein mit 104a bezeichnetes, hier im Wesentlichen wasserstofffreies, Rauchgas wird durch die Wärmerückgewinnungseinheit 130 geleitet und von dieser abgezogen, wobei das Rauchgas 104 zumindest teilweise einer Analyse unterzogen werden kann, die eine einem Ammoniak- und/oder Distickstoffoxidgehalt des Rauchgases 104 entsprechende Angabe liefert. Ammoniak oder Harnstoff 105 kann auf der Grundlage dieser Angabe in mindestens einen Abschnitt in einem Rauchgasweg des Rauchgases 104a dosiert werden, der für eine selektive katalytische oder nichtkatalytische Entstickung geeignet ist.

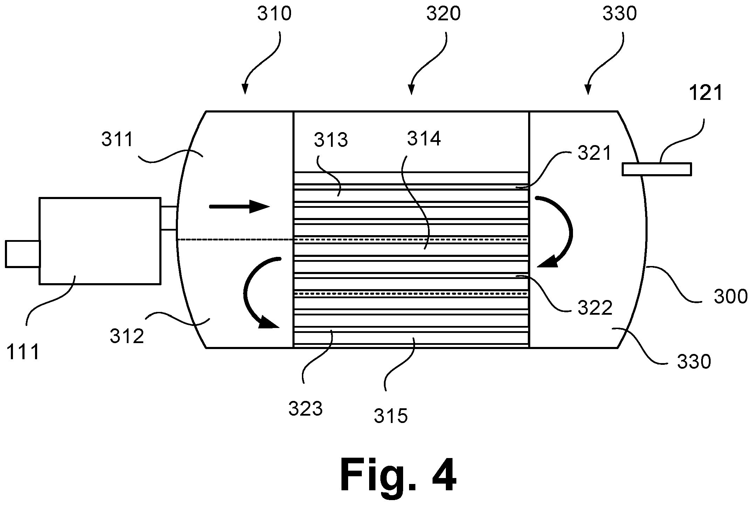

Figur 4 zeigt eine Ausgestaltung der bereits zu in Figur 3 beschriebenen Prozessanordnung in Teilansicht.

Hierbei sind die erste Ofeneinheit 110, die zweite Ofeneinheit 110a, die erste Wärmeübertragungseinheit 120 und die zweite Wärmeübertragungsanordnung 120a in einer Manteleinheit 300 angeordnet, das entlang einer gemeinsamen Achse einen ersten Endabschnitt 310, einen zentralen Abschnitt 320 und einen zweiten Endabschnitt 330 umfasst, wobei der erste Endabschnitt 310 axial unterteilt ist, so dass ein erstes Endabschnittkompartiment 311 und ein zweites Endabschnittkompartiment 312 gebildet werden, wobei der zentrale Abschnitt 320 axial unterteilt ist, so dass ein erstes zentrales Kompartiment 321 und ein zweites zentrales Kompartiment 322 gebildet werden.

In der hier veranschaulichten Ausgestaltung ist das erste Endabschnittkompartiment 311 mit dem ersten zentralen Kompartiment 321 fluidisch verbunden, das erste zentrale Kompartiment 321 ist mit dem zweiten zentralen Kompartiment 322 über den zweiten Endabschnitt 330 fluidisch verbunden, das erste Endabschnittkompartiment 311 wird verwendet, um die erste Ofeneinheit 110 bereitzustellen, das erste zentrale Kompartiment 321 wird verwendet, um die erste Wärmeübertragungsanordnung 120 bereitzustellen, der zweite Endabschnitt 230 wird verwendet, um die zweite Ofeneinheit 110a bereitzustellen, und das zweite zentrale Kompartiment 322 wird verwendet, um die zweite Wärmeübertragungseinheit 120a bereitzustellen.

In dem ersten zentralen Kompartiment 321 und dem zweiten zentralen Kompartiment 322 sind Rohrbündel 313, 314 vorgesehen, die in an sich bekannter Weise ausgeführt sein können, um die erste Wärmeübertragungseinheit 120 und die zweite Wärmeübertragungseinheit 120a bereitzustellen.

In dem in Figur 4 dargestellten Beispiel, das jedoch kein zwingendes Merkmal von hier vorgeschlagenen Ausgestaltungen darstellt, kann der zentrale Abschnitt 320 axial unterteilt sein, um zusätzlich zu dem ersten zentralen Kompartiment 321 und dem zweiten zentralen Kompartiment 322 ein drittes zentrales Kompartiment 323 zu bilden, wobei das zweite zentrale Kompartiment 322 über das zweite Endabschnittkompartiment 312 mit dem dritten zentralen Kompartiment 323 fluidisch verbunden ist und wobei der dritte zentrale Teilabschnitt 323 zur Bereitstellung der Wärmerückgewinnungseinheit 130 verwendet wird und ebenfalls entsprechende Rohrbündel 315 aufweisen kann.

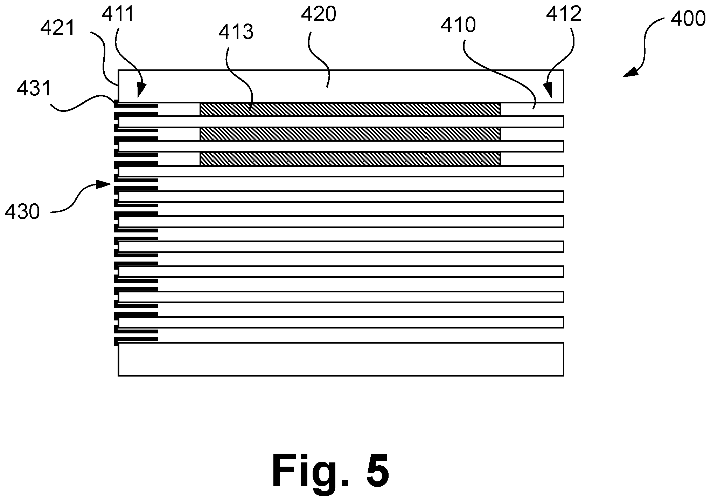

In Figur 5 ist ein Rohrbündel 400 veranschaulicht, das Teil einer Prozessanordnung gemäß einer Ausgestaltung der Erfindung sein kann, beispielsweise der Prozessanordnungen 100, 200 oder 300 gemäß den Figuren 1 bis 3. Das Rohrbündel 400 kann dabei in einem Mantel 300 angeordnet sein, wie in Figur 4 dargestellt, oder in jeder beliebigen anderen Anordnung bereitgestellt sein. Insbesondere kann ein entsprechendes Rohrbündel 400 Teil einer Wärmerückgewinnungseinheit 120 oder einer ersten und/oder zweiten Wärmerückgewinnungseinheit 120, 120a, aber auch beispielsweise einer Katalyseeinheit 140 sein.

Die Anzahl von Rohren 410, die als Wärmeübertragungsrohre oder Reaktionsrohre ausgebildet sein können, ist beliebig. In Figur 5 ist nur ein Rohr 410 mit einem Bezugszeichen versehen. Im Falle von Reaktionsrohren können die Rohre 410 jeweils ein oder mehrere Katalysatorbetten 411 aufweisen, wie anhand dreier Beispiele in Figur 5 veranschaulicht. Im Fall von Wärmeübertragungsrohren können die Rohre 410 im Wesentlichen frei durchgängig ausgebildet sein. In einem Mantelraum 420 kann ein Fluid strömen, das durch Wärme eines durch die Rohre 410 geführten Fluids aufgeheizt werden kann. Wie für Fachleute offensichtlich, ergeben sich dabei Maximaltemperaturen am Eintritt in die Rohre 410, die in Figur 5 in der Zeichnung links angenommen werden soll. Weil das eintretende Fluid dabei in hier vorgeschlagenen Ausgestaltungen durch die Verbrennung und/oder Spaltung von Ammoniak stickstoffhaltig bis stickstoffreich ist, kann es hier zur Nitridierung kommen.

In hier vorgeschlagenen Ausgestaltungen ist daher vorgesehen, am Eintritt in die Rohre 410, d.h. in Figur 5 links, Auskleidehülsen 430 bereitzustellen, die einen Terminalabschnitt der Rohre 410 auskleiden, und die aus einem nitridierresistenten Material umfassend Metall und/oder eine Keramik ausgebildet sind.

In Figur 5 sind dabei Eintrittsenden in die Reaktionsrohre 410 summarisch mit 411 und Austrittsenden summarisch mit 412 bezeichnet. Ein heißes, stickstoffhaltiges Gasgemisch wird den Reaktionsrohren 410 an den Eintrittsenden 411 zugeführt und an den Austrittsenden 412 entnommen. Die Auskleidehülsen 430 können insbesondere Krägen 431 aufweisen, die an einem Rohrboden 421, an dem die Rohre 410 mit ihren Eintrittsenden 411 befestigt sind, aufliegen, sowie sich in die Rohre 410 erstreckende zylindrische Abschnitte.

## Patentansprüche

1. Verfahren zum Umsetzen von Ammoniak unter Verwendung einer Prozessanordnung (100, 200, 300), mittels derer zumindest ein Teil einer Ammoniakeinsatzmenge, die der Prozessanordnung (100, 200, 300) zugeführt wird, unter Erhalt eines Stickstoff enthaltenden Gasgemischs umgesetzt wird, wobei das Stickstoff enthaltende Gasgemisch oder ein Teil hiervon durch eine Anzahl von Rohren (410) eines Rohrbündels (400) geführt wird, wobei das Gasgemisch oder dessen durch die Rohre (410) geführter Teil den Rohren (410) an Eintrittsenden (411) zugeführt und an Austrittsenden (412) entnommen wird, **dadurch gekennzeichnet, dass** die Rohre (410) zumindest an ihren Eintrittsenden (411) mit Auskleidehülsen (430) ausgekleidet sind.

2. Verfahren nach Anspruch 1, bei dem die Auskleidehülsen (430) ein Keramikmaterial aufweisen.

3. Verfahren nach Anspruch 2, bei dem das Keramikmaterial Dialuminiumtrioxid und/oder Zirkondioxid umfasst.

4. Verfahren nach einem der Ansprüche 1 bis 3, bei dem die Auskleidehülsen (430) eine nitridierfeste Legierung aufweisen.

5. Verfahren nach einem der vorstehenden Ansprüche, bei dem die Auskleidehülsen (430) mehrteilig ausgebildet sind.

6. Verfahren nach einem der vorstehenden Ansprüche, bei dem die Auskleidehülsen (430) Krägen (431), die an einem Rohrboden (421), an dem die Rohre (410) mit ihren Eintrittsenden (411) befestigt sind, aufliegen, und sich in die Rohre (410) erstreckende zylindrische Abschnitte aufweisen.

7. Verfahren nach einem der vorstehenden Ansprüche, bei dem die Auskleidehülsen (430) sich in einem Anteil von weniger als 10% einer jeweiligen Gesamtlänge der Rohre (410) in diese erstrecken.

8. Verfahren nach einem der vorstehenden Ansprüche, bei dem das Gasgemisch oder dessen durch die Rohre (410) geführter Teil den Rohren (410) mit einer Temperatur von 500 bis 900°C zugeführt wird.

9. Verfahren nach einem der vorstehenden Ansprüche, bei dem die Prozessanordnung (100, 200, 300) eine Ofeneinheit (110) aufweist, in der ein erster Teil der Ammoniakeinsatzmenge verbrannt wird.

10. Verfahren nach Anspruch 9, bei dem ein zweiter Teil der Ammoniakeinsatzmenge thermisch und nichtkatalytisch gespalten wird.

11. Verfahren nach Anspruch 9, bei dem ein zweiter Teil der Ammoniakeinsatzmenge katalytisch gespalten wird.

12. Verfahren nach Anspruch 9, bei dem ein zweiter Teil der Ammoniakeinsatzmenge in einer weiteren Ofeneinheit (110a) verbrannt wird.

13. Verfahren nach einem der vorstehenden Ansprüche, bei dem die Rohre (410) des Rohrbündels (400) Wärmeübertragungsrohre oder Reaktionsrohre sind.

14. Prozessanordung (100, 200, 300), die dafür eingerichtet ist, zumindest einen Teil einer Ammoniakeinsatzmenge, die der Prozessanordnung (100, 200, 300) zugeführt wird, unter Erhalt eines Stickstoff enthaltenden Gasgemischs umzusetzen und das Stickstoff enthaltende Gasgemisch oder einen Teil hiervon durch eine Anzahl von Rohren (410) eines Rohrbündels (400) zu führen, wobei das Gasgemisch oder dessen durch die Rohre (410) geführter Teil den Rohren (410) an Eintrittsenden (411) zugeführt und an Austrittsenden (412) entnommen wird, **dadurch gekennzeichnet, dass** die Rohre (410) oder ein Teil hiervon an ihren Eintrittsenden (411) mit Auskleidehülsen (430) ausgekleidet sind.
